# EUROPEAN PATENT APPLICATION

(11) **EP 2 573 914 A2**
(43) Date of publication of application: **27.03.2013**
(21) Application number: 12182934.5
(22) Date of filing: 04.09.2012
(51) Int. Cl.: H02K 9/14

(54) **Electric motor**

(30) Priority: 26.09.2011 JP 2011209991
(71) Applicant: Kabushiki Kaisha Toshiba, Minato-ku, Tokyo 105-8001 (JP)
(72) Inventor: Koyama, Taihei, Tokyo, Tokyo 105-8001 (JP); Noda, Shinichi, Tokyo, Tokyo 105-8001 (JP); Yuuki, Kazuaki, Tokyo, Tokyo 105-8001 (JP); Shiraishi, Shigetomo, Tokyo, Tokyo 105-8001 (JP)
(74) Representative: Fritsche, Daniel

(57) **Abstract**

An electric motor is disclosed that includes a first electric motor frame; a second electric motor frame positioned outside the first electric motor frame; a first ventilation path between the first frame and the second frame; and a first ventilation path fan installed within the first ventilation path. The first ventilation path fan can be integral with a shaft of the electric motor. The first ventilation path can be at least partially defined by the first and second electric motor frame. The electric motor of claim 1 further comprising a control apparatus attached outside of the second frame. The electric motor can also include a second ventilation path between the control apparatus and the second frame wherein the second ventilation path is in communication with the first ventilation path. The electric motor can also include a second ventilation path fan located in the second ventilation path.

## Description

### CROSS-REFERENCE TO RELATED APPLICATIONS

This application is based upon and claims the benefit of priority from the prior Japanese Patent Application No. 2011-209991, filed on September 26, 2011, the entire contents of which are incorporated herein by reference.

### FIELD

Embodiments described herein generally relate to a control apparatus integrated electric motor in which a control apparatus and an electric motor are installed integrally or in a close contact manner.

### BACKGROUND

In an electric motor for a vehicle, for example, for a rail road vehicle, a main electric motor is installed in the vicinity of a wheel within a truck. Conventionally, in an induction motor which is used as a main electric motor, a plurality of main electric motors is driven by one control apparatus. Since the control apparatus is large in size, it is installed under the floor of the vehicle, and is connected to each of the main electric motors via a wiring.

In recent years, a permanent magnet synchronous motor has been applied as the main electric motor on the basis of a high efficiency of the magnet and an advance in technology for improving a magnetic flux density. In this case, the main electric motor and the control apparatus supplying an electric power correspond individually one for one. Since the large-sized control apparatus which has corresponded previously to a plurality of main electric motors can be individually installed, it can be installed in the vicinity of each of the main electric motors, or can be integrated with the main electric motor.

By integrating the main electric motor and the control apparatus, the following advantages are generated.

As a first one of them, the conventional main electric motor and the control apparatus are connected by a cable wiring. When both the elements are arranged close to each other, a wiring distance becomes shorter, or the wiring is not necessary and it is possible to achieve a cost reduction. Further, since a wiring noise is not generated, a signal wire is not affected by the noise.

As a second one, since the main electric motor and the control apparatus correspond individually one for one, it is possible to downsize the control apparatus, and it is possible to reduce a total cost including the main electric motor and the control apparatus.

As a third one, since an under floor space of the vehicle which is occupied by the control apparatus is generated, it can be effectively utilized for an installation of the other electric power unit to this portion, an installation of a double deck vehicle and the like.

However, in order to accommodate the main electric motor and the control apparatus within the truck which is greatly constrained in its dimension, it is necessary to downsize them. Further, since both the main electric motor and the control apparatus generate heat, it is necessary to sufficiently cool so as to prevent them from going beyond an allowable temperature.

As a drive apparatus in which the electric motor and the control apparatus are integrally provided, for example, there can be listed up an apparatus which is disclosed in JP-A No. 2003-259600.

According to this apparatus, it is structured such that a cooling wind is sucked from an external portion on the basis of a rotation of a fan which is provided in a rotor, and the wind absorbs the heat at a time of passing through a periphery of a switching element of an inverter, and discharges to the external portion.

However, in the conventional apparatus as mentioned above, the following problem to be solved exists.

In the control apparatus, since a calorific power is widely increased at a time of starting an operation or just before stopping it, a cooling performance in a low speed range is important. A fan which rotates integrally with a rotor rotates in proportion to an operation of the rotor, for example, a fan for a rail road vehicle. In this case, since the rotation of the fan is running at a low speed or stops at a time when a train is running at a low speed or stops, it is impossible to sufficiently feed the cooling wind to the control apparatus.

This invention is made by solving the problem mentioned above, and an object thereof is to provide a control apparatus integrated electric motor which can improve a cooling performance in a low speed range by integrating a main electric motor and a control apparatus.

An electric motor according to an embodiment includes a cylindrical first electric motor frame, a rotating shaft which is rotatably supported to the first electric motor frame via a bearing and has an end portion protruding to an outer side of the first electric motor frame in such a manner as to pass through a center portion in a longitudinal direction of the first electric motor frame, a cylindrical rotor which is provided in an outer peripheral side of the rotating shaft within the first electric motor frame, a stator which is positioned in an outer peripheral side of the rotor and is provided in the first electric motor frame, a disc-like electric motor fan which is attached to an end portion in an outer side of the bearing of the rotating shaft, a second electric motor frame which is positioned in an outer peripheral side in such a manner as to cover a part of the first electric motor frame, a control apparatus which is installed in adjacent to an outer side of the second electric motor frame, an element which is attached to a base plate within the control apparatus, a heat radiating fin which is attached to a surface of another base plate to which the element is attached within the control apparatus, a ventilation path which connects the second electric motor frame and the control apparatus, and a ventilation path fan which is provided in the ventilation path.

### BRIEF DESCRIPTION OF THE DRAWINGS

Fig. 1 is a vertical cross sectional view of a control apparatus integrated electric motor which is formed as a totally-enclosed fan-cooled type and is of an intake air type according to a first embodiment;
Fig. 2 is a vertical cross sectional view of a control apparatus integrated electric motor which is formed as a self-ventilation type and is of an intake air type according to the first embodiment;
Fig. 3 is a vertical cross sectional view of a control apparatus integrated electric motor which is formed as a totally-enclosed fan-cooled type and is of an exhaust air type according to the first embodiment;
Fig. 4 is a vertical cross sectional view of a control apparatus integrated electric motor which is formed as a totally-enclosed fan-cooled type and is of an intake air type according to a second embodiment;
Fig. 5 is a vertical cross sectional view of a control apparatus integrated electric motor which is formed as a totally-enclosed fan-cooled type and is of an exhaust air type according to the second embodiment;
Fig. 6 is a vertical cross sectional view of a control apparatus integrated electric motor which is formed as a totally-enclosed fan-cooled type and is of an intake air type according to a third embodiment;
Fig. 7 is a vertical cross sectional view of a control apparatus integrated electric motor which is formed as a totally-enclosed fan-cooled type and is of an intake air type according to the third embodiment;
Fig. 8 is a vertical cross sectional view of a control apparatus integrated electric motor which is formed as a totally-enclosed fan-cooled type and is of an intake air type according to a fourth embodiment;
Fig. 9 is a vertical cross sectional view of a control apparatus integrated electric motor which is formed as a totally-enclosed fan-cooled type and is of an exhaust air type according to the fourth embodiment;
Fig. 10 is a vertical cross sectional view of a control apparatus integrated electric motor which is formed as a totally-enclosed fan-cooled type and is of an intake air type according to a fifth embodiment; and
Fig. 11 is a vertical cross sectional view of a control apparatus integrated electric motor which is formed as a totally-enclosed fan-cooled type and is of an exhaust air type according to the fifth embodiment.

### DETAILED DESCRIPTION

A description will be in detail given below of a control apparatus integrated electric motor according to an embodiment of this invention with reference to the accompanying drawings.

### (First embodiment)

### (Construction)

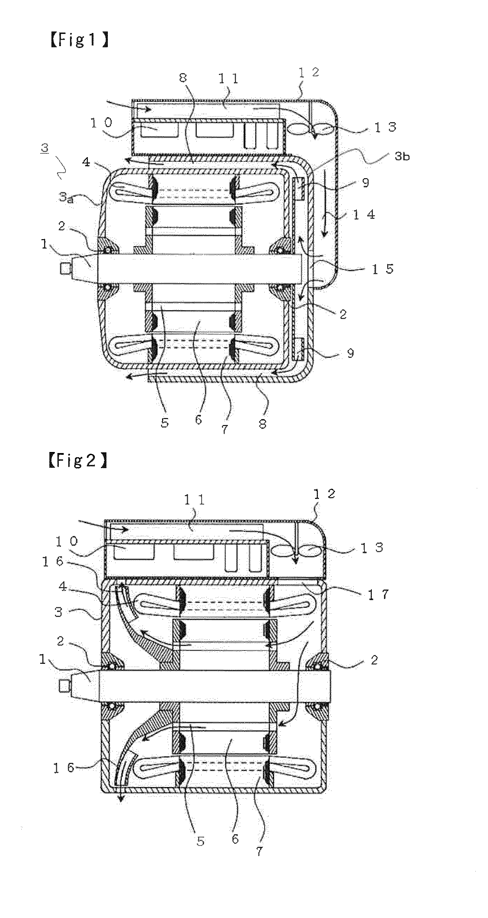

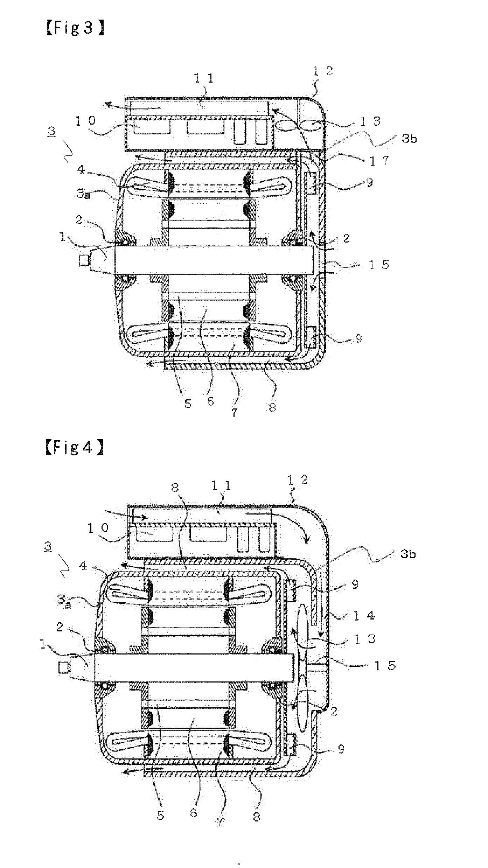

Fig. 1 is a vertical cross sectional view of a control apparatus integrated electric motor which is formed as a totally-enclosed fan-cooled type and is of an intake air type according to a first embodiment. Fig. 2 is a vertical cross sectional view of a control apparatus integrated electric motor which is formed as a self-ventilation type and is of an intake air type according to the first embodiment. Fig. 3 is a vertical cross sectional view of a control apparatus integrated electric motor which is formed as a totally-enclosed fan-cooled type and is of an exhaust air type according to the first embodiment.

As shown in Fig. 1, the control apparatus integrated electric motor includes a first electric motor frame 3a which is occluded in both ends and is formed as an approximately cylindrical shape, and a rotating shaft 1 which is provided by passing through the first electric motor frame 3a approximately coaxially. Both end portions of the rotating shaft 1 are supported respectively by bearings 2 in such a manner as to be rotatable with respect to the first electric motor frame 3a, and these both end portions protrude outward from the first electric motor frame 3a. One end portion of the rotating shaft 1 constructs an output end which outputs a driving force to a wheel via a coupling, a gear box and the like which are not illustrated.

Within the first electric motor frame 3a, a cylindrical rotor iron core 6 which is formed by a laminated iron core is fixed to a center portion in an axial direction of the rotor 1. A plurality of rotor ducts 5 passing through an axial direction is formed in the rotor iron core 6 (or the rotor 6).

A cylindrical stator iron core 7 which is formed by a laminated iron core is provided in an outer peripheral side of the rotor iron core 6 via an air gap. The stator iron core 7 is fixed to an inner peripheral surface of the first electric motor frame 3a. A plurality of grooves extending in an axial direction is formed in an inner peripheral portion of the stator iron core 7, and a stator coil 4 is embedded in these grooves. A coil end of the stator coil 4 protrudes in an axial direction from both side surfaces of the stator iron core 7. The stator is formed by combining the stator iron core 7 and the stator coil 4.

In the case of the totally-enclosed fan-cooled type, an outer fan 9 is attached to an opposite load side end portion of the rotating shaft 1, and is integrally rotated with the rotating shaft 1. The outer fan 9 is generally called as a radial fan, and is structured such that the same effect can be obtained in both rotating directions of the rotating shaft 1. Further, in the case of a self-ventilation type, the outer fan is not provided, and in place of it, an inner fan 16 is constructed in an inner portion of a drive side electric motor. A driving mode and an effect thereof are the same as those of the outer fan. Including the present embodiment, in the following embodiments, a fan within the electric motor such as the outer fan 9 and the inner fan 16 mentioned above is generically called as a ventilation path fan 13.

A second electric motor frame 3b formed as a hemicylindrical shape is provided in an outer periphery of the first electric motor frame 3a in such a manner as to cover the first electric motor frame 3a. An upper portion of the second electric motor frame 3b is provided with a plurality of control apparatuses 12 which controls a motion of the electric motor as well as feeding an electric power to the electric motor. In this case, the first electric motor frame 3a, the second electric motor frame 3b and the control apparatus 12 are structured such as to be integrally connected, however, may be structured such that both are separated. Further, the first electric motor frame 3a and the second electric motor frame 3b are generically called as the electric motor frame 3.

An inner portion of the control apparatus 12 is provided in an inner portion which is comparted like a small room with the element 10 and the other electronic equipment. A plurality of heat radiating fins 11 is constructed in an opposite surface side via the element 10 and a base plate 18. Further, a portion within the control apparatus 12 is called as a ventilation path, and a ventilation path fan 13 is provided within the ventilation path at one position or a plurality of positions on a flow path of a cooling wind. In Fig. 1, the ventilation path fan 13 is connected between an installed portion of the element 10, the base plate 18 and the heat radiating fin 11, and the electric motor frame 3.

A shape of the ventilation path fan 13 can be freely set, for example, an axial fan, a radial fan. A weight for bringing about a force of inertia is decided on the basis of a passing wind amount, a desired rotation duration or the like.

In the case of the structure of Fig. 1, a ventilation path 14 is constructed along a side surface of the second electric motor frame 3b from the control apparatus 12 to an electric motor intake air port 15 which is provided in the vicinity of the rotating shaft in an opposite drive side. The stator duct 8 is provided in an outer peripheral side of the outer fan 9 at a plurality of positions along an outer periphery, and passes through to an external portion. In other words, the stator duct is constructed by an outer surface of the first electric motor frame 3a and an inner surface of the second electric motor frame 3b.

In the case of the structure of Fig. 2, a communication hole 17 is provided from the control apparatus 12 to the electric motor. A hole for discharging air is provided in the electric motor frame 3 in the vicinity of an outer peripheral side of the inner fan 16, and is communicated with the external portion.

In the case of the structure of Fig. 3, a communication hole 17 is provided in the second electric motor frame 3b in the vicinity of an outer periphery of the outer fan 9, and the communication hole 17 is connected to the ventilation path of the control apparatus 12. The ventilation path fan 13 is provided between the communication hole 17, and the element 10, the base plate 18 and the heat radiating fin 11 within the control apparatus 12. The other structures are the same as Fig. 1.

### (Operation)

A description will be given of an operation of the control apparatus integrated electric motor which is structured as mentioned above.

When the rotating shaft 1 is rotated by a main body of the electric motor at a time of operating the electric motor, the outer fan 9 or the inner fan 16 is rotated integrally with it.

In the case of Fig. 1, an ambient air (a cooling wind) flows into from a side of the element 10 which is installed within the control apparatus 12, and passes through between the heat radiating fins 11. Thereafter, the cooling wind passes through while coming into contact with the ventilation path fan 13, and flows into the inner portion of the electric motor from the electric motor intake air port 15 via the ventilation path 14. Thereafter, the cooling wind passes through the stator duct 8 from the outer fan 9 and is discharged to the external portion.

In the case of Fig. 2, the same flow as Fig. 1 is generated up to the inner portion of the electric motor, and the wind flowing into the inner portion of the electric motor while passing through the communication hole 17 passes through the rotator duct 5, and is discharged to the external portion from the inner fan 16.

In the case of Fig. 3, the ambient air (the cooling wind) flows into the inner portion of the electric motor from the electric motor intake air port 15 which is provided in the vicinity of the opposite load side rotating shaft 1. The wind from the inner fan 9 is divided into a flow toward the stator duct 8 and a flow toward the control apparatus 12. The wind flowing into the control apparatus 12 passes through while coming into contact with the ventilation path fan 13, passes through between the heat radiating fins 11, and is discharged to the external portion.

The flows of the cooling winds come to approximately the same operations even if an arrangement of each of the control apparatuses 16, a shape of the heat radiating fin 11 and a shape of the intake air port are freely set.

### (Effect)

The ambient air (the cooling wind) is sucked on the basis of a suction force in conjunction with the rotation of the outer fan 9 or the inner fan 16, and the heat generated from the element 10 is absorbed at a time of passing through the heat radiating fin 11. Further, the ventilation path fan 13 is rotated on the basis of a continuous contact of the cooling wind, and maintains the rotation for a while even after the cooling wind is not fed by the force of inertia, and feeds the cooling wind.

In other words, the control apparatus 12 is cooled by the fan which rotates together with the rotating shaft during the operation, and is cooled by the ventilation path fan 13 after the stop. According to the system mentioned above, it is possible to feed the cooling wind at a fixed amount or more to the control apparatus 12 in both of a high speed rotation and a low speed rotation of the electric motor, and it is possible to set the element 10 to be equal to or less than an allowable temperature.
Further, in Fig. 3, since the directions of the cooling winds which are discharged from the electric motor and the control apparatus are the same, in addition to the operations of Fig. 1 and Fig. 2, the cooling wind passing through the electric motor or the control apparatus is not again incorporated into the electric motor or the control apparatus. According to this, it is possible to further maintain the cooling performance.

According to the electric motor of the embodiment mentioned above, on the basis of the structure in which the fan for cooling is attached to the rotating shaft of the main electric motor, it is possible to provide the control apparatus integrated electric motor which can improve the cooling performance in the low speed range.

### (Second embodiment)

### (Construction)

Next, a description will be given of a control apparatus integrated electric motor according to a second embodiment of this invention.

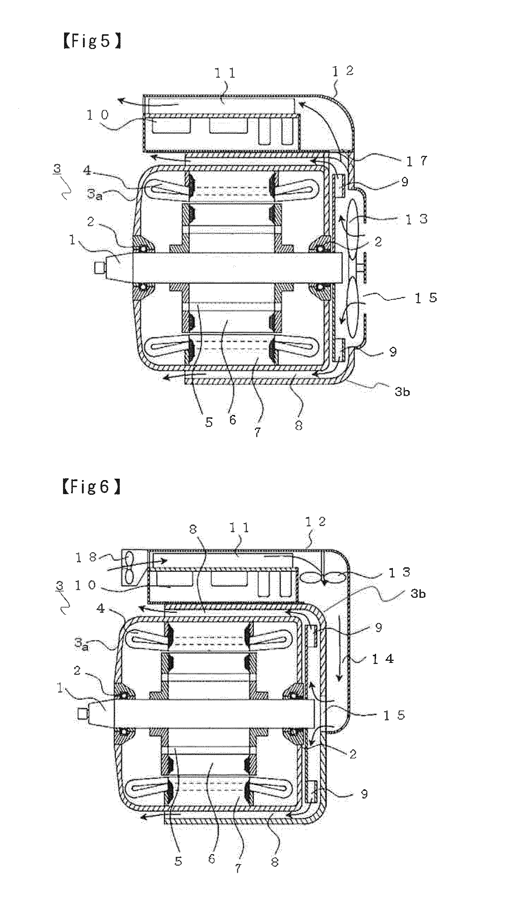

Fig. 4 is a vertical cross sectional view of a control apparatus integrated electric motor which is formed as a totally-enclosed fan-cooled type and is of an intake air type according to a second embodiment. Fig. 5 is a vertical cross sectional view of a control apparatus integrated electric motor which is formed as a totally-enclosed fan-cooled type and is of an exhaust air type according to the second embodiment. In the drawings, the same reference numerals are attached to the same elements as those of the first embodiment, and a detailed description thereof will be omitted.

In the second embodiment, the ventilation path fan 13 is provided in the vicinity of the outer fan 9 of the electric motor and on the basis of a structure in which a radius thereof is shorter than the outer fan 9. It is preferable that an installed plate is set to a front face of the electric motor intake air port 15, and the rotating shaft of the ventilation path fan 13 is provided independently from the rotating shaft 1 of the electric motor.

In the second embodiment, the other structures are the same as the first embodiment.

### (0peration)

A description will be given of an operation of the control apparatus integrated electric motor which is structured as mentioned above.

In the same manner as the first embodiment, the cooling wind passes through while coming into contact with the ventilation path fan 13 on the basis of a sucking action in conjunction with the rotation of the outer fan 8, and flows to the outer fan 9. The other operations are the same.

### (Effect)

It is possible to make a diameter of the ventilation path fan 13 larger by embedding the ventilation path fan 13 in the electric motor side, and it is possible to increase the rotation duration by increasing the force of inertia. Therefore, the cooling time of the control apparatus 12 is increased even after the stop, and it is possible to improve the cooling performance. Further, since the cooling wind goes on flowing in the electric motor itself after the stop, it is possible to additionally improve the cooling performance of the electric motor. The other effects are the same as the first embodiment.

According to the electric motor of at least one of the embodiments mentioned above, it is possible to provide the control apparatus integrated electric motor which can improve the cooling performance in the low speed range, on the basis of the structure in which the fan for cooling is attached to the rotating shaft of the main electric motor.

### (Third embodiment)

### (Construction)

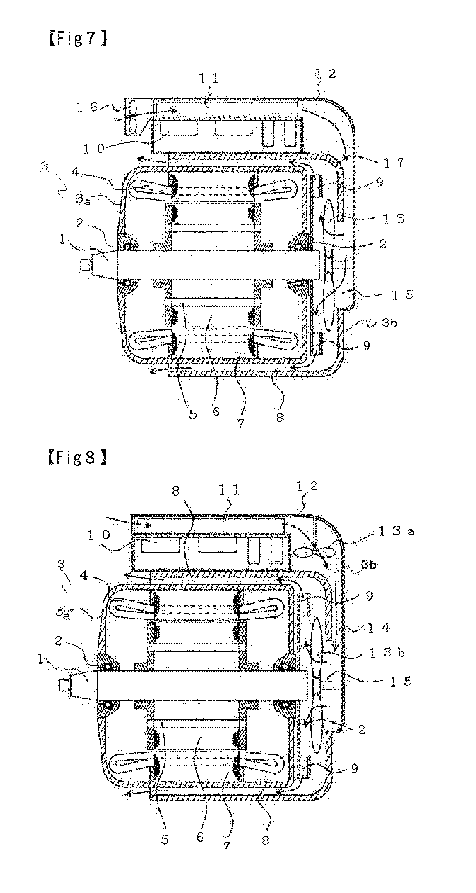

Fig. 6 and Fig. 7 are vertical cross sectional views of a control apparatus integrated electric motor which is formed as a totally-enclosed fan-cooled type and is of an intake air type according to a third embodiment. In the drawing, the same reference numerals are attached to the same elements as those of the first embodiment, and a detailed description thereof will be omitted.

In the third embodiment, an electric fan 18 is provided in an intake air port portion of the control apparatus 12. The electric fan 18 is driven electrically, and is structured such that it can control a rotating speed. Further, it is provided only at one position in the drawing, however, may be arranged at a plurality of positions.

In Fig. 6, the other structures are the same as Fig. 1. Further, in Fig. 7, the other structures are the same as Fig. 4. In addition to these structures, the electric fan 18 may be installed in the self-ventilation type as shown in Fig. 2 and the exhaust air type as shown in Fig. 3.

In the third embodiment, the other structures are the same as those of the first embodiment.

### (0peration)

A description will be given of an operation of the control apparatus integrated electric motor which is structured as mentioned above.

The wind which passes through the electric fan 18 and increases its wind amount at a time of flowing into the control apparatus 12 passes through the heat radiating fin 11, and flows toward the ventilation path fan 13. A thereafter flow is the same as the first embodiment.

### (Effect)

By means of the electric fan 18, the cooling wind can be fed to the control apparatus 12 even in a state in which the ventilation path fan 13 stops. Further, the electric fan 18 can reduce an electric power consumption by controlling a supply amount of an electricity on the basis of an amount of the passing wind, for example, by setting an electric power to an off state in the case that the amount of the cooling wind is much at a time of the operation, by controlling the rotating speed thereof.

Since the electric fan 18 is provided in the side of the outer portion of the control apparatus, a maintenance work is easily carried out, and it is easy to replace in the case of a trouble. Further, since a plurality of electric fans is provided, the amount of the cooling wind does not come to zero by the other electric fan even if one is out of order. The other effects are the same as the first embodiment.
According to the electric motor of at least one of the embodiments mentioned above, it is possible to provide the control apparatus integrated electric motor which can improve the cooling performance in the low speed range, on the basis of the structure in which the fan for cooling is attached to the rotating shaft of the main electric motor.

### (Fourth embodiment)

### (Construction)

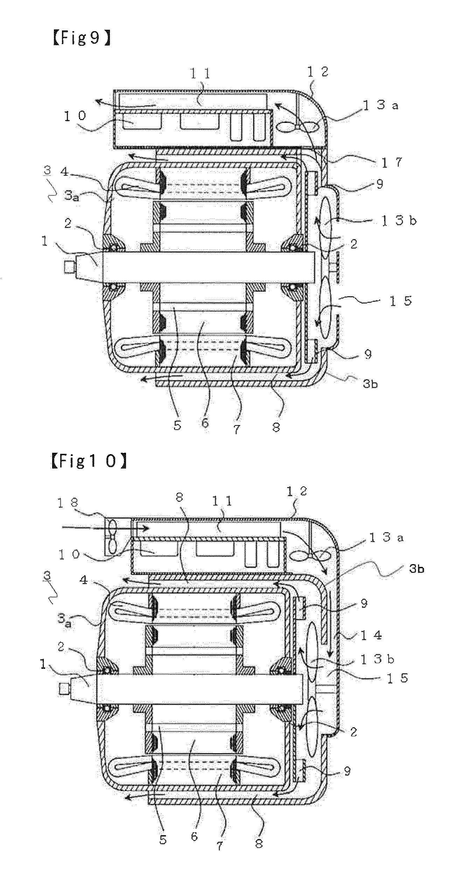

Fig. 8 and Fig. 9 are vertical cross sectional views of a control apparatus integrated electric motor which is formed as a totally-enclosed fan-cooled type and is of an intake air type according to a fourth embodiment. In the drawing, the same reference numerals are attached to the same elements as those of the first embodiment, and a detailed description thereof will be omitted.

In the fourth embodiment, the ventilation path fan is provided both within the control apparatus 12 and within the electric motor. It comes to a structure obtained by combining the first embodiment and the second embodiment.

The others are the same structure as those of the first embodiment.

### (0peration)

A description will be given of an operation of the control apparatus integrated electric motor which is structured as mentioned above.

In the structure of the intake air type in Fig. 8, the cooling wind flowing into the control apparatus 12 passes through between the heat radiating fins 11, on the basis of a sucking action in conjunction with the rotation of the outer fan 9, passes through while coming into contact with the ventilation path fan 13a, thereafter passes through the communication ventilation path 14, thereafter passes through while coming into contact with the ventilation path fan 13b, and flows toward the outer fan 9. The thereafter flow is the same operation as the first embodiment.

Further, in the structure of the exhaust air type in Fig. 9, the cooling wind flowing into from the electric motor intake air port 15 passes through while coming into contact with the ventilation path fan 13b, and flows toward the outer fan 9. Thereafter, it divisionally flows toward the stator duct 8 and the communication hole 17, passes through within the control apparatus 12 while coming into contact with the ventilation path fan 13a, passes through between the heat radiating fins 11, and is discharged to the external portion. The other flows have the same operation as the first embodiment.

### (Effect)

Since the ventilation path fan 13 is provided at two positions in the control apparatus 12 and within the electric motor, it is possible to increase the amount of the cooling wind after stopping the electric motor. Further, if any one of them is out of order, it is possible to cool by another, and it is possible to improve a redundancy.

### (Fifth embodiment)

### (Construction)

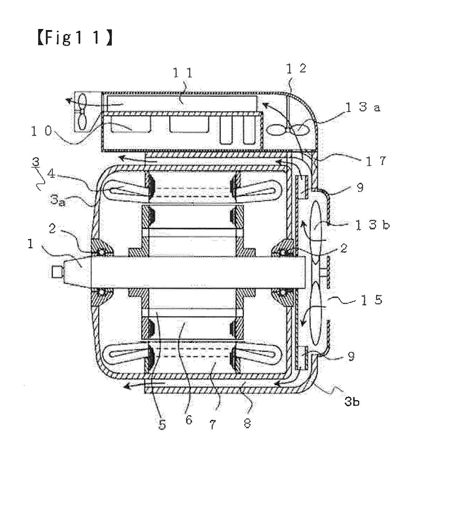

Fig. 10 and Fig. 11 are vertical cross sectional views of a control apparatus integrated electric motor which is formed as a totally-enclosed fan-cooled type and is of an intake air type according to a fifth embodiment. In the drawing, the same reference numerals are attached to the same elements as those of the first embodiment, and a detailed description thereof will be omitted.

In the fifth embodiment, the ventilation path fan is provided both within the control apparatus 12 and within the electric motor, and the electric fan 18 is provided in the intake air port portion of the control apparatus 12. It comes to a structure obtained by combining the first embodiment to the third embodiment.

The others are the same structure as those of the first embodiment.

### (0peration)

A description will be given of an operation of the control apparatus integrated electric motor which is structured as mentioned above.

Since the electric fan 18 is provided in the intake air port of the control apparatus 12, the cooling wind passes through within the control apparatus 12 on the basis of the rotation of the electric fan 18 even in the state in which the ventilation path fans 13a and 13b stop. The other flows have the same operations as the embodiment 4.

### (Effect)

It is possible to cool the control apparatus and it is possible to improve the cooling performance, by driving the electric fan 18 even in the state in which the ventilation path fans 13a and 13b stop. Further, since a plurality of fans for cooling including the ventilation path fan is installed, it is possible to cover the cooling operation by the other fans even at a time when any one is out of order, and it is possible to improve a redundancy.

Since the attaching plate 13 is installed in a horizontal direction, and one control apparatus is provided in one attaching plate, and is individually supported, the vibration of one attaching plate does not affect another attaching plate at a time when the vibration is propagated.

Further, since the ventilation path of the cooling wind is provided only between the heat radiating fins 11 within the attaching and detaching frame 12, the cooling wind having a lot of wind amount and having a high flow speed passes through the heat radiating fin 11. Accordingly, it is possible to efficiently radiate the heat which is generated in the control apparatus 12, and it is possible to enhance the cooling performance.

As another effect, it is possible to shorten the radial dimension of the attaching and detaching frame 12, and it is possible to reduce an occupied space as the attaching and detaching frame in spite of being increased in the axial direction.

This invention is not limited to the embodiments mentioned above, but can be embodied by modifying the constructing elements within a range which does not deviate from the content thereof. Further, various inventions can be formed by an appropriate combination of a plurality of constructing elements which is disclosed in the embodiments mentioned above. Several constructing elements may be omitted from all the constructing elements shown in the embodiments, and the constructing elements over the different embodiments may be appropriately combined.

This invention is not limited to the control apparatus integrated electric motor, but can be applied to a rotary electric motor such as an electric motor for a motor vehicle, an electric motor for consumer electronics, an industrial electric motor, a power generator.

## Claims

1. An electric motor comprising:
a first electric motor frame;
a second electric motor frame positioned outside the first electric motor frame;
a first ventilation path between the first frame and the second frame; and
a first ventilation path fan installed within the first ventilation path.

2. The electric motor of claim 1 wherein the first ventilation path fan is integral with a shaft of the electric motor.

3. The electric motor of claim 1 wherein the first ventilation path is at least partially defined by the first and second electric motor frame.

4. The electric motor of claim 1 further comprising a control apparatus attached outside of the second frame.

5. The electric motor of claim 4 further comprising a second ventilation path between the control apparatus and the second frame wherein the second ventilation path is in communication with the first ventilation path.

6. The electric motor of claim 4 further comprising a second ventilation path fan located in the second ventilation path.

7. The electric motor of claim 4 further comprising a heat sink in thermal communication with the control apparatus and the second ventilation path.

8. The electric motor of claim 1 further comprising a control apparatus frame and a second ventilation path, wherein the second ventilation path is at least partially defined by the control apparatus frame and in communication with the first ventilation path.

9. An electric motor comprising:
a first electric motor frame;
a shaft which is rotatably supported to the first electric motor frame;
a rotor which is provided in an outer side of the rotating shaft within the first electric motor frame;
a stator which is positioned in an outer side of the rotor and is provided in the first electric motor frame; and
a ventilation path fan which is attached to an end portion in an outer side of the rotating shaft.

10. The electric motor of claim 9 further comprising:
a second electric motor frame which is positioned in an outer side covering a part of the first electric motor frame;
a control apparatus which is installed in adjacent to an outer side of the second electric motor frame;
a heat radiating fin in thermal communication with the control apparatus;
a ventilation path which connects the second electric motor frame and the control apparatus; and
a ventilation path fan which is provided in the ventilation path.

11. The electric motor of claim 10 further comprising an air intake partially defined by the second electric motor frame.

12. The electric motor of claim 10 further comprising an air exhaust partially defined by the first electric motor frame.

13. The electric motor of claim 9 further comprising an air intake and an air exhaust wherein the air intake is located on an opposite side of the electric motor as the air exhaust.

14. An electric motor comprising:
a cylindrical first electric motor frame;
a shaft which is rotatably supported to the first electric motor frame via a bearing;
a cylindrical rotor which is provided in an outer peripheral side of the rotating shaft within the first electric motor frame;
a stator which is positioned in an outer peripheral side of the rotor and is provided in the first electric motor frame;
an electric motor fan which is attached between the first electric motor frame and the rotor in the rotating shaft;
a control apparatus which is installed in adjacent to an outer side of the first electric motor frame;
a heat radiating fin in thermal communication with the control apparatus;
a ventilation path which connects the first electric motor frame an,d the control apparatus; and
a ventilation path fan which is provided in the ventilation path.

15. The electric motor of claim 14, wherein a center of rotation of the ventilation path fan is substantially the same as the shaft.
